(19) Europäisches Patentamt
European Patent Office
Office européen des brevets

(11) EP 1 498 748 B1

(12) **FASCICULE DE BREVET EUROPEEN**

(45) Date de publication et mention
de la délivrance du brevet:
**20.03.2013 Bulletin 2013/12**

(51) Int Cl.:
**G01V 99/00** [(2009.01)]

(21) Numéro de dépôt: **04291711.2**

(22) Date de dépôt: **07.07.2004**

(54) **Méthode de déformation graduelle d'un modèle booléen de simulation d'un milieu hétérogène, contraint par des données dynamiques**

Verfahren zur stufenweisen Deformation eines booleschen Simulationsmodells, die durch dynamische Daten festgestellt ist

Method for gradual deformation of a boolean simulation model of a heterogeneous medium constrained by dynamic data

(84) Etats contractants désignés:
**AT BE BG CH CY CZ DE DK EE ES FI FR GB GR HU IE IT LI LU MC NL PL PT RO SE SI SK TR**

(30) Priorité: **18.07.2003 FR 0308841**

(43) Date de publication de la demande:
**19.01.2005 Bulletin 2005/03**

(73) Titulaire: **Institut Français du Pétrole**
**92852 Rueil-Malmaison Cedex (FR)**

(72) Inventeurs:
• **Le Ravalec-Dupin, Mickaële**
**92500 Rueil-Malmaison (FR)**
• **Hu, Lin-Ying**
**92500 Rueil-Malmaison (FR)**

(56) Documents cités:
**FR-A- 2 795 841    FR-A- 2 821 946**

• HU LIN Y: "History Matching of Object-Based Stochastic Reservoir Models" PROCEEDINGS - 13TH MIDDLE EAST OIL AND GAS SHOW AND CONFERENCE, TECHNOLOGY SOLUTION FOR THE OIL AND GAS BUSINESS: NEW MIDDLE EAST FOCUS, MEOS 2003;BAHRAIN, BAHRAIN JUN 9-12 2003, vol. 13, 5 avril 2003 (2003-04-05), - 8 avril 2004 (2004-04-08) pages 1-12, XP002278829 Proc Middle East Oil Show; Proceedings of the Middle East Oil Show 2003
• LIN Y HU: "GRADUAL DEFORMATION AND ITERATIVE GALIBRATION OF GAUSSIAN-RELATED STOCHASTIC MODELS" MATHEMATICAL GEOLOGY, PLENUM PRESS, LONDON, GB, vol. 32, no. 1, janvier 2000 (2000-01), pages 87-108, XP008021541 ISSN: 0882-8121
• RAVALEC-DUPIN LE M ET AL: "OPTIMIZATION WITH THE GRADUAL DEFORMATION METHOD" MATHEMATICAL GEOLOGY, PLENUM PRESS, LONDON, GB, vol. 34, no. 2, février 2002 (2002-02), pages 125-142, XP008021586 ISSN: 0882-8121

## Description

La présente invention concerne une méthode de déformation graduelle d'un modèle booléen de simulation d'un milieu hétérogène, contraint par des données dynamiques.

La méthode selon l'invention s'applique notamment à la construction d'un modèle servant à représenter la distribution spatiale dans une zone souterraine de certaines propriétés physiques du milieu comme la perméabilité, la porosité, etc.

## Etat de la technique

Les documents suivants que l'on va citer dans le cours de la description ci-après, illustrent l'état de la techniques :

- Chilès, J. P., and Delfiner, P., 1999, Geostatistics: Modeling spatial uncertainty, Wiley, New York, 695p.

- Hu, L.-Y., 2000a, Gradual déformation and iterative calibration of Gaussian-related stochastic models, Math. Geol., 32(1).

- Hu, L.-Y., 2000b, Gradual déformation of non-Gaussian stochastic models, Geostats 2000 Cape Town, WJ Kleingeld and DG Krige (eds.), 1, 94-103.

- Hu, L.-Y., 2003, History matching of object-based stochastic réservoir models. SPE 81503.

- Journel, A., and Huijbregts, C.J., 1978, Mining Geostatistics, Academic Press, London, 600p.

- Le Ravalée, M., Noetinger, B., and Hu, L.-Y., 2000, The FFT moving average (FFT-MA) generator: an efficient numerical method for generating and conditioning Gaussian simulations, Math. Geol., 32(6), 701-723.

- Le Ravalec, M., Hu, L.-Y. and Noetinger, B., 2001, Stochastic Reservoir modeling constrained to dynamic data: local calibration and inference of the structural parameters, SPE Journal, 25-31.

Différentes méthodes basées sur un schéma de déformation graduelle, ont fait l'objet de brevets ou demandes de brevet suivants du demandeur: FR 2.780.798, FR 2.795.841, FR 2.821.946, FR 02/13.632 ou FR 03/02.199.

Les réalisations de modèles stochastiques gaussiens, ou apparentés, sont souvent utilisées pour représenter la distribution spatiale de certaines propriétés physiques, comme la perméabilité ou la porosité, dans les réservoirs souterrains. On recourt alors couramment aux méthodes inverses pour contraindre ces réalisations à des données dont elles dépendent de façon non linéaire. C'est le cas notamment en hydrologie ou en ingénierie pétrolière. Ces méthodes reposent sur la minimisation d'une fonction objectif, encore appelée fonction coût, qui mesure l'écart entre les données mesurées sur le terrain et les réponses correspondantes simulées numériquement pour les réalisations représentant le milieu que l'on cherche à caractériser. Le but affiché est d'identifier les réalisations associées aux valeurs de fonctions objectifs les plus faibles, c'est-à-dire les réalisations les plus cohérentes au regard des données.

La méthode de déformation graduelle a été introduite dans ce cadre (cf. Hu, 2000a; Le Ravalec *et al.,* 2000). Cette technique de paramétrage géostatistique permet de modifier graduellement les réalisations à partir d'un nombre restreint de paramètres. Elle est particulièrement adaptée aux problèmes de minimisation, car appliquée aux réalisations, elle induit une variation continue et régulière de la fonction objectif. De fait, la minimisation peut être conduite à partir des techniques les plus avancées, à savoir les techniques de gradients. La méthode de déformation graduelle s'est avérée efficace pour contraindre des modèles de réservoirs pétroliers à des données de production (cf. Le Ravalec *et al.,* 2001).

Par la suite, la méthode de déformation graduelle, initialement mise en place pour des modèles gaussiens, a été étendue à des modèles non gaussiens (cf. Hu, 2000b), et plus particulièrement aux modèles objets ou booléens. Ces modèles sont utilisés pour décrire des milieux comprenant par exemple des chenaux ou des fractures. Les chenaux ou fractures sont alors assimilés à des objets. Un algorithme a été proposé pour simuler la migration graduelle des objets dans l'espace, c'est à dire le déplacement graduel des objets dans l'espace. Pour une réalisation d'un modèle objet, ce type de perturbation se traduit par une variation lissée de la fonction objectif, comme pour les modèles gaussiens. Cet algorithme a ensuite été généralisé au modèle booléen non-stationnaire et conditionnel (cf. Hu, 2003). Par ailleurs, toujours en s'appuyant sur la déformation graduelle des lois gaussiennes, (cf. Hu (2003) propose des solutions permettant de modifier progressivement le nombre d'objets peuplant un modèle, ce nombre étant représentatif d'une loi de Poisson. Néanmoins, une des limites de ces développements est que les objets apparaissent ou disparaissent soudainement, ce qui peut engendrer des discontinuités sévères de la fonction objectif et rendre difficilement praticables les techniques de gradients utilisées classiquement pour mener à bien le processus de minimisation.

**Déformation graduelle: rappels**

*Fonction aléatoire multigaussienne*

Jusqu'à présent, les principes de déformation graduelle qui ont été proposés s'appliquent aux fonctions aléatoires multigaussiennes. Soient, par exemple, deux fonctions aléatoires indépendantes, $Y_1(\mathbf{x})$ et $Y_2(\mathbf{x})$, multigaussiennes et stationnaires d'ordre 2. $\mathbf{x}$ est le vecteur position. On suppose que ces deux fonctions ont même moyennes et variances, à savoir 0 et 1, et même fonction de covariance. On construit alors une nouvelle fonction aléatoire $Y(t)$ en combinant $Y_1$ et $Y_2$ suivant l'expression:

$$Y(t) = Y_1 \cos(t) + Y_2 \sin(t).$$

On peut montrer que quel que soit $t$, $Y$ a même moyenne, variance et modèle de covariance que $Y_1$ et $Y_2$. En outre, $Y(t)$ est aussi une fonction aléatoire multigaussienne, car elle est la somme de deux fonctions aléatoires multigaussiennes.

Suivant ce principe de combinaison, on peut à partir de deux réalisations indépendantes $y_1$ et $y_2$ de $Y_1$ et $Y_2$, construire une chaîne de réalisations $y(t)$ qui dépendent uniquement du paramètre de déformation $t$. L'idée de base des processus de minimisation par déformation graduelle est d'explorer cette chaîne de réalisations et de déterminer le paramètre de déformation qui fournit la réalisation la plus compatible avec les données mesurées sur le terrain, c'est-à-dire les pressions, les débits de production, les temps de percée, etc. Comme l'exploration d'une unique chaîne de réalisation ne permet pas en général d'identifier une réalisation fournissant une fonction objectif suffisamment faible, on itère le processus de recherche. On combine alors la réalisation optimale déterminée pour la 1$^{ère}$ chaîne avec une nouvelle réalisation indépendante de $Y_2$ et on en déduit une nouvelle chaîne de réalisations dont l'exploration peut fournir une réalisation qui diminue davantage la fonction objectif, *etc*.

*Processus ponctuel de Poisson*

L'élément clé des modèles booléens est un processus ponctuel de Poisson qui caractérise l'agencement spatial des objets. Considérons un modèle booléen de base pour lequel les objets ont même forme et sont répartis aléatoirement et uniformément dans l'espace. Les positions de ces objets sont distribuées suivant un processus ponctuel de Poisson de densité constante. En d'autres termes, la position d'un objet dans l'espace à $n$ dimensions $[0,1]^n$ est définie par le vecteur $\mathbf{x}$ dont les $n$ composantes sont des nombres uniformes tirés indépendamment selon la loi de distribution uniforme entre 0 et 1.

La technique de migration (cf. Hu, 2000b) des objets consiste à déformer graduellement la position des objets. La position d'un objet est déterminée par des nombres uniformes. Avant toute chose, on transforme ces nombres uniformes en nombres gaussiens :

$$\mathbf{Y} = G^{-1}(\mathbf{x}).$$

$G$ est la fonction de répartition normale standard. Soient $\mathbf{x}_1$ la position initiale d'un objet donné et $\mathbf{x}_2$ une autre position possible, indépendante de $\mathbf{x}_1$. On définit une trajectoire pour l'objet en combinant les transformées gaussiennes de ces deux positions suivant la méthode de déformation graduelle :

$$\mathbf{x}(t) = G\left[G^{-1}(\mathbf{x}_1)\cos(t) + G^{-1}(\mathbf{x}_2)\sin(t)\right]$$

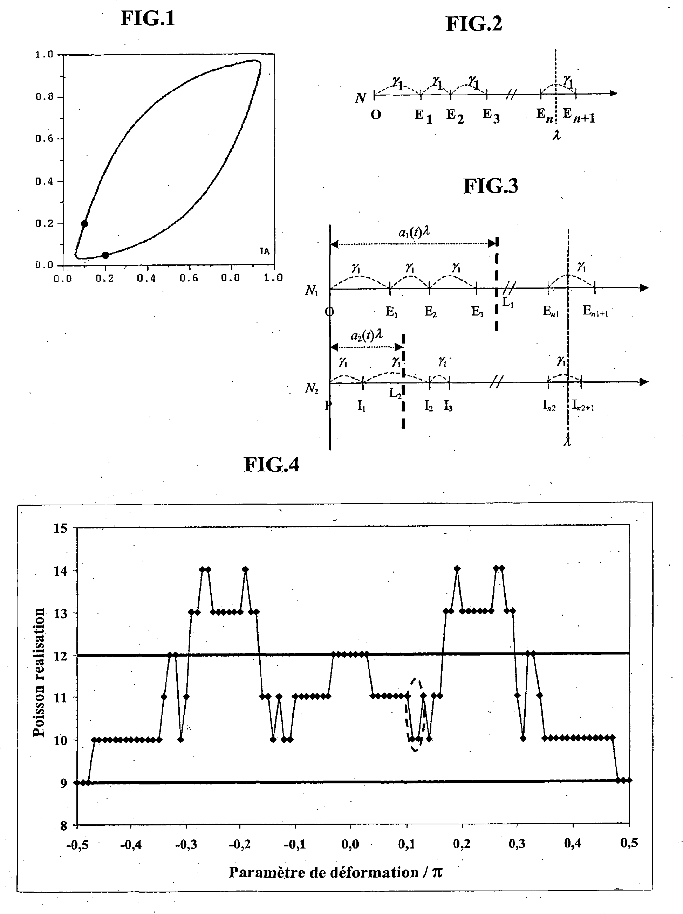

On peut montrer que pour toute valeur du paramètre de déformation $t$, $\mathbf{x}$ est un point uniforme de $[0,1]^n$. Quand les deux positions $\mathbf{x}_1$ et $\mathbf{x}_2$ sont fixées, la trajectoire est complètement déterminée. Un exemple bidimensionnel est visualisé sur la Fig.1.

La technique de migration des objets constitue un premier pas vers la déformation graduelle des simulations booléennes. Une de ses limites est que le nombre d'objets est supposé constant au cours de la déformation. Des solutions sont proposées pour modifier progressivement le nombre d'objets peuplant un modèle (cf. brevet N 01/03 194 ou Hu, 2003 précités). Néanmoins, une des limites de ces développements est que les objets apparaissent ou disparaissent soudainement, ce qui peut engendrer des discontinuités sévères de la fonction objectif. La méthode de déformation graduelle selon l'invention permet, on va le voir, de réduire cette discontinuité et ainsi de faciliter la mise en oeuvre des technique d'optimisation basées sur le gradient.

## LA METHODE SELON L'INVENTION

La méthode selon l'invention permet de déformer graduellement un modèle booléen permettant de simuler au mieux la configuration spatiale dans une zone souterraine hétérogène, d'objets géologiques définis par des grandeurs physiques, qui soit contraint par des données dynamiques mesurées, représentatives de déplacements de fluides dans le milieu, et en imposant une continuité dans l'évolution des dits objets. Elle comporte la réalisation d'un processus itératif d'optimisation à partir de réalisations incluant chacune des objets dont le nombre est une variable aléatoire de Poisson de moyenne définie, et une minimisation d'une fonction objectif mesurant l'écart entre des données dynamiques réelles et les données dynamiques simulées au moyen d'un simulateur d'écoulement à partir de la réalisation combinée, par ajustement de coefficients de combinaison, le processus d'ajustement itératif étant poursuivi jusqu'à l'obtention d'une réalisation optimale du modèle stochastique.
La méthode se distingue en ce que, à chaque itération :

- on construit une réalisation combinée obtenue par combinaison d'une part d'une réalisation initiale formée de N1(t) objets correspondant à une première valeur moyenne et d'au moins une deuxième réalisation indépendante du même modèle formée de N2(t) objets correspondant à une deuxième valeur moyenne, cette combinaison étant telle que le nombre N(t) d'objets de la combinaison ait une valeur moyenne constamment égale à la somme de la première et de la deuxième valeur moyenne.

**La méthode se distingue en ce que, à chaque itération:**

à chaque itération et pour une même valeur moyenne de la combinaison, on fait varier de façon concomitante la première et la deuxième valeur moyenne de manière à faire varier graduellement le nombre et la taille d'objets issus de chacune des réalisations combinées.
En d'autres termes, la méthode proposée permet non seulement de modifier graduellement le nombre d'objets peuplant un modèle booléen mais aussi et surtout d'envisager une nouvelle technique de construction des modèles booléens avec, à présent, apparition et disparition progressives des objets.
Cette nouvelle possibilité permet d'atténuer les discontinuités de la fonction objectif dans une procédure d'inversion et par conséquent de faciliter la mise en place des algorithmes d'optimisation basés sur le gradient.
Le schéma proposé de déformation graduelle appliqué aux variables aléatoires de Poisson rend possible la déformation graduelle du nombre d'objets peuplant des simulations booléennes. De plus, nous proposons d'associer la taille des objets au processus de Poisson utilisé pour générer le nombre d'objets d'une simulation booléenne, ce qui nous conduit à un algorithme permettant de faire apparaître ou disparaître un objet de façon progressive lors de la déformation d'une réalisation booléenne. Ce faisant, on réduit les discontinuités éventuelles de la fonction objectif. Ces algorithmes sont aisés à mettre en oeuvre et peuvent être combinés avec un algorithme d'optimisation pour caler des modèles de réservoir de type booléen à des données de production, pression, temps de percée, etc.
Contrairement au modèle de réservoir de type gaussien, la discontinuité d'une fonction objectif est intrinsèque au modèle de réservoir de type objet. Dans certains cas, le déplacement d'un objet d'une seule maille peut provoquer un changement brutal de la connexité du modèle et par conséquent un changement radical du comportement hydrodynamique du modèle. En faisant apparaître ou disparaître progressivement un objet dans une simulation booléenne, nous n'éliminons pas, mais atténuons cette discontinuité. Par conséquent, nous facilitons la mise en oeuvre des algorithmes d'optimisation basés sur les gradients.

## PRESENTATION SUCCINCTE DES FIGURES

Les caractéristiques et avantages de la méthode et du dispositif selon l'invention, apparaîtront plus clairement à la lecture de la description ci-après d'un exemple non limitatif de réalisation, en se référant aux dessins annexés où :

- la figure 1 montre un exemple de trajectoire définie à partir de deux points dans $[0,1]^2$ ;

- la figure 2 montre une simulation d'une réalisation $n$ pour une variable de Poisson de paramètre $\lambda$ ;

- la figure 3 montre un exemple de déformation graduelle d'une variable de Poisson de moyenne λ en combinant deux variables de Poisson indépendantes, $N_1$ et $N_2$;

- la figure 4 montre un exemple de déformation graduelle d'une réalisation de Poisson pour une variable de paramètre 10 ;

- la figure 5 montre un exemple de déformation graduelle du nombre et de la position des objets avec apparition et disparition progressive. La petite ellipse grise disparaît et une ellipse noire apparaît ;

- la figure 6 montre un exemple de modèle de référence au centre. Pression au puits injecteur à gauche et flux fractionnaire au puits producteur à droite ;

- la figure 7 montre un exemple d'invasion du réservoir par l'eau injectée ;

- la figure 8 montre l'évolution de la fonction objectif lorsque le paramètre de déformation décrit une chaîne ;

- la figure 9 montre un exemple de déformation graduelle du nombre et de la position des objets avec apparition et disparition soudaine ; cette chaîne correspond aux quatre points encerclés de la figure 8 ; et

- la figure 10 montre un autre exemple de déformation graduelle du nombre et de la position des objets avec apparition et disparition progressive ; il s'agit de la même chaîne que pour la figure 9.

## DESCRIPTION DETAILLEE DE LA METHODE

### Déformation graduelle du nombre d'objets

La technique de migration des objets constitue un premier pas vers la déformation graduelle des simulations booléennes. Une de ses limites est que le nombre d'objets est supposé constant au cours de la déformation. Des solutions sont proposées pour modifier progressivement le nombre d'objets peuplant un modèle (cf. Brevet N 01/03 194 ou Hu, 2003 précités). Néanmoins, une des limites de ces développements est que les objets apparaissent ou disparaissent soudainement, ce qui peut engendrer des discontinuités sévères de la fonction objectif. La méthode de déformation graduelle selon l'invention permet, on va le voir, de réduire cette discontinuité et ainsi de faciliter la mise en oeuvre des technique d'optimisation basées sur le gradient.

### *Loi de Poisson*

Notre objectif est de déformer graduellement le nombre des objets pour une simulation booléenne. Ce nombre est aléatoire et suit une loi de Poisson, c'est-à-dire que la probabilité pour que ce nombre (non négatif) soit $n$ est :

$$P(N = n) = \exp(-\lambda)\frac{\lambda^n}{n!}$$

où λ est la moyenne et la variance de la variable de Poisson $N$ .

Une technique possible pour simuler une variable de Poisson est de générer un processus de Poisson de moyenne 1 sur une période égale à λ, puisque le nombre d'événements survenant sur cette période suit une loi de Poisson de paramètre λ. Pour ce faire, on génère successivement des intervalles $OE_1$, $E_1E_2$, ...$E_nE_{n+1}$ **(figure 2)** indépendants suivant une loi exponentielle de moyenne égale à 1 (loi $\gamma_1$), et on ajoute leurs valeurs jusqu'à dépasser λ. La fonction de répartition d'une variable $X$ suivant la loi exponentielle de moyenne 1 s'écrit :

$$F(x) = 1 - \exp(-x).$$

Si $r$ est un nombre aléatoire, uniformément distribué entre 0 et 1, $1-r$ est aussi uniformément distribué sur [0 ;1]. On pose alors $1- r = 1 - \exp(-x)$. De fait, pour simuler les segments successifs, il suffit de *répéter $x = -Log(r)$* pour différents $r$. La réalisation $n$ de la variable de Poisson $N$ est alors le plus grand entier $n$ tel que :

$$\sum_{i=1}^{n} -\mathrm{Log}(r_i) < \lambda$$

ou, ce qui est équivalent, mais plus économique du point de vue calcul :

$$\prod_{i=1}^{n} r_i > \exp(-\lambda).$$

Par contre, cette seconde formulation est sans doute plus numériquement instable quand $\lambda$ est grand.

### *Déformation graduelle de variables de Poisson*

Les principes de déformation graduelle présentés plus haut s'appliquent à des nombres gaussiens qui varient continûment dans $\mathfrak{R}$. Les variables de Poisson étant des entiers, ces principes ne s'appliquent pas en l'état.

On rappelle que la somme de deux variables de Poisson, indépendantes, de paramètres l'une $\lambda$ et l'autre $\mu$, est encore une variable de Poisson, mais de paramètre $\lambda + \mu$. Ce résultat fondamental est à la base de l'algorithme de déformation graduelle que nous proposons. Soient $N_1$ et $N_2$ deux variables de Poisson, indépendantes et de paramètre $\lambda$ (cf. figure 3). On propose de déformer graduellement les paramètres des deux variables additionnées, mais en respectant à chaque instant le fait que la somme des paramètres vaut $\lambda$. Pour éviter toute confusion entre le paramètre des variables de Poisson et le paramètre de déformation, on parlera respectivement de moyenne et paramètre de déformation. On construit ainsi une nouvelle variable de Poisson $N(t)$ de moyenne $\lambda$ à partir de :

$$N(t)\{\lambda\} = N_1\{a_1(t)\lambda\} + N_2\{a_2(t)\lambda\}$$

avec $\sum_{i=1}^{2} a_i = 1$. $a_i(t)\lambda$ est la moyenne de la variable $N_i$ au moment de la combinaison (cf. figure 3). On choisira, par exemple, $\alpha_1 = \cos^2(t)$ et $\alpha_2 = \sin^2(t)$. Ce paramétrage s'étend facilement à n dimensions :

$$N(t)\{\lambda\} = \sum_{i=1}^{n} N_i\{a_i(t)\lambda\} \text{ avec } \sum_{i=1}^{n} a_i = 1, \text{ et présente l'avantage d'être périodique.}$$

Pour les coefficients ai, on peut choisir par exemple des fonctions trigonométriques.

En variant le paramètre de déformation $t$, on modifie la moyenne des variables additionnées, ce qui affecte les réalisations de ces variables. Leur somme change donc aussi. En suivant ce principe de déformation, on peut à partir de deux réalisations $n1$ et $n2$ de $N_1$ et $N_2$, construire une chaîne de réalisations $n(t)$ dépendant uniquement du paramètre de déformation $t$. Quand $t$ égale 0, la réalisation de $N$ vaut $n_1$ ; quand $t$ égale $\pm\dfrac{\pi}{2}$, la réalisation de $N$ vaut $n_2$. On peut montrer que $N(t)$ est périodique de période $\pi$. La figure 4 illustre ce principe de déformation pour une variable de Poisson de moyenne 10. Quand le paramètre de déformation divisé par $\pi$ vaut 0, la réalisation est la même que la réalisation considérée initialement ($n_1$=12). Quand il vaut $\pm 0.5$, la réalisation est la même que la deuxième réalisation considérée pour la combinaison ($n_2$=9). Une autre approche pourrait être envisagée pour déformer graduellement une variable de Poisson de paramètre $\lambda$. Elle consisterait à déplacer un segment de longueur $\lambda$ sur une droite construite à partir de l'addition d'une infinité de segments de longueurs obtenues par une loi $\gamma_1$. Le nombre de segments complets rentrant dans le segment de longueur $\lambda$ serait une réalisation de la variable de Poisson et varierait avec la position de ce segment.

## Construction successive de chaînes de déformation

Dans le cas des réalisations gaussiennes, la méthode de déformation graduelle s'intègre naturellement dans les processus de minimisation. L'ensemble se traduit par l'exploration successive de chaînes de réalisations gaussiennes fabriquées à partir d'une réalisation initiale qui correspond à l'optimum déterminé pour la chaîne précédente et d'une seconde réalisation gaussienne générée aléatoirement pour chaque chaîne.

Pour les nombres de Poisson, on suit une démarche analogue. La déformation graduelle selon les principes précisés dans la section précédente de deux réalisations d'une loi de Poisson, une, dite initiale, et une seconde, dite complémentaire, fournit une première chaîne. L'exploration de cette chaîne conduit à l'identification d'une réalisation « optimale » qui minimise la fonction objectif. Cette réalisation est alors utilisée comme réalisation initiale pour la création d'une nouvelle chaîne. Cette nouvelle chaîne requiert en outre une nouvelle réalisation complémentaire, générée indépendamment. A nouveau, l'exploration de cette nouvelle chaîne peut permettre de réduire davantage la fonction objectif. Ce processus de recherche est itéré jusqu'à ce que la fonction objectif soit jugée suffisamment faible.

## Apparition et disparition progressive d'un objet

Le principe de déformation graduelle suggéré plus haut permet de perturber au cours d'une optimisation le nombre d'objets peuplant une simulation booléenne. Clairement, l'apparition ou la disparition brutale d'objets est susceptible d'induire une variation brusque de la fonction objectif. Or, les optimisations s'appuyant sur des calculs de gradients nécessitent une évolution continue de la fonction objectif. Nous proposons donc un nouveau type de modèles booléens assurant l'apparition et la disparition progressives des objets.

## Principe

Revenons à la génération d'un nombre $n$ de Poisson à partir d'un processus de Poisson. La méthode rappelée plus haut (cf. figure 2) consiste à mettre bout à bout des segments jusqu'à l'obtention d'une longueur excédant le paramètre $\lambda$ de la variable de Poisson. $n$ est l'entier tel que $OE_n < \lambda$ et $OE_{n+1} > \lambda$.

Appelons $L_1$ le point tel que la longueur du segment $OL_1$ égale la moyenne de la variable de Poisson (cf. figure 3). Au cours du processus de déformation, ce point se déplace. A $t=0$, pour la variable $N_1$, $OL_1=\lambda$. Le segment $OL_1$ comprend alors $n_1$ segments complets ($OE_1$, $E_1E_2$, ... $E_{n1-1}E_{n1}$) et un $(n_1+1)^{ème}$ segment tronqué ($E_{n1}L_1$). On en déduit que la simulation booléenne est peuplée de $n_1+1$ objets de taille, surface ou volume définis à partir des longueurs anamorphosées des segments $OE_1$, $E_1E_2$, ...$E_{n1}L_1$. Par souci de simplification, on parlera dans la suite de taille d'objets. Si on augmente le paramètre de déformation $t$, le segment $OL_1$ se réduit ; il en va de même pour $E_{n1}L_1$. En conséquence, la taille du $(n_1+1)^{ème}$ objet diminue: l'objet disparaît progressivement. Si la moyenne de la variable $N_1$ continue de décroître, le $n_1^{ème}$ objet va aussi commencer à se réduire, etc. Dans le même temps, la moyenne de la variable $N_2$ augmente. La réalisation pour cette variable vaut d'abord 0, puis un premier objet apparaît progressivement. Sa taille est contrôlée par la longueur du segment $PL_2$, où le point $L_2$ est pour $N_2$ l'équivalent de $L_1$ pour $N_1$. Quand $PL_2=PI_1$, le premier objet est complet. Si la moyenne de $N_2$ continue d'augmenter, un deuxième objet apparaît. Sa taille dépend à présent de la longueur du segment $I_1L_2$.

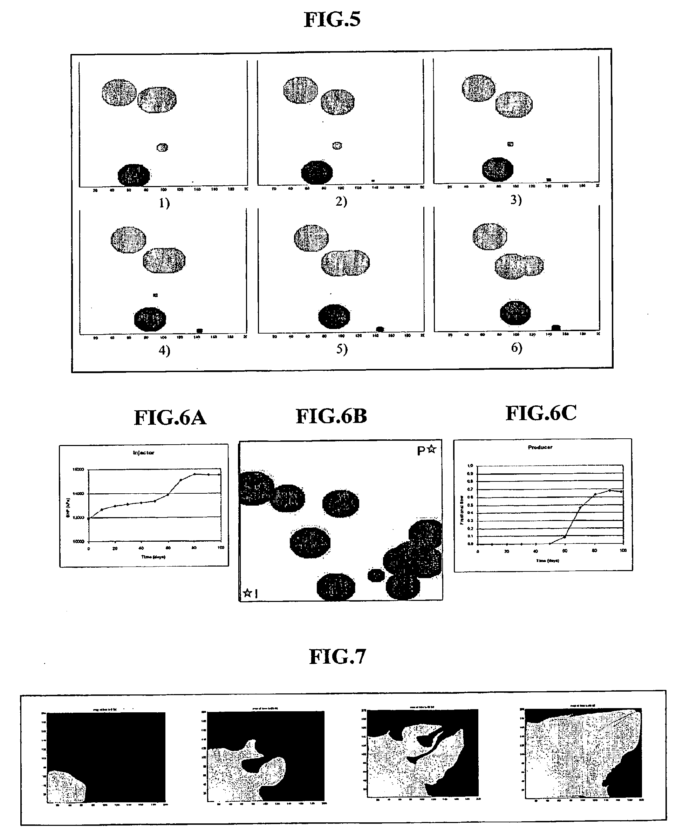

La figure 5 illustre la méthode proposée. On distingue deux familles d'objets, des ellipses noires et des ellipses grises. La différence de couleur tient au fait que les objets considérés sont obtenus à partir de deux variables de Poisson, $N_1$ et $N_2$. La position des ellipses varie graduellement; les ellipses apparaissent et disparaissent progressivement. Sur l'image 1, on observe 4 ellipses grises dont 3 grandes (deux se superposent plus ou moins) et une petite: cette dernière est en train d'apparaître. On remarque aussi une ellipse noire et un point noir, qui traduit l'apparition d'une nouvelle ellipse noire. Sur les images 2 à 5, la petite ellipse grise devient de plus en plus petite jusqu'à n'être plus qu'un point. Dans le même temps, la petite ellipse noire croît. Sur l'image 6, la petite ellipse grise a totalement disparu. Une autre ellipse grise commence à présent à se réduire. La petite ellipse noire devient un peu plus grande.

Comme plus haut, on pourrait simuler le même type de déformation graduelle en déplaçant un segment de longueur $\lambda$, sur une droite construite à partir de l'addition d'une infinité de segments de longueurs obtenues par une loi $\gamma_1$. Ce segment de longueur $\lambda$ comprendrait des segments complets au centre et, aux extrémités, un segment qui tendrait à grandir et un autre qui afficherait le comportement inverse.

## Impact sur la fonction objectif

A titre d'exemple, nous considérons un modèle de réservoir synthétique figure 6. Il s'agit d'une roche réservoir de perméabilité 500 mD et de lentilles peu perméables de perméabilité 50 mD. Les lentilles sont représentées par des ellipses. Par simplicité, on suppose la porosité constante et égale à 30% partout. Le modèle est discrétisé sur une grille de 200x200 mailles, de longueur 1 m suivant l'axe X et 0.8 m suivant l'axe Y. Pour ce réservoir initialement saturé en huile, on effectue le test suivant à l'aide du simulateur d'écoulement 3DSL. On injecte de l'eau à 100 m$^3$/jour pendant 100 jours au puits I et on produit de l'huile à pression constante au puits P. La pression au puits injecteur et le flux fractionnaire en eau au puits producteur sont reportés sur la figure 6. Ces données sont appelées données de référence car elles se rapportent au modèle de référence. L'invasion en eau est illustrée par la figure 7 pour différents temps. Les lentilles forment initialement une barrière à l'écoulement, puis peu à peu se saturent en eau.

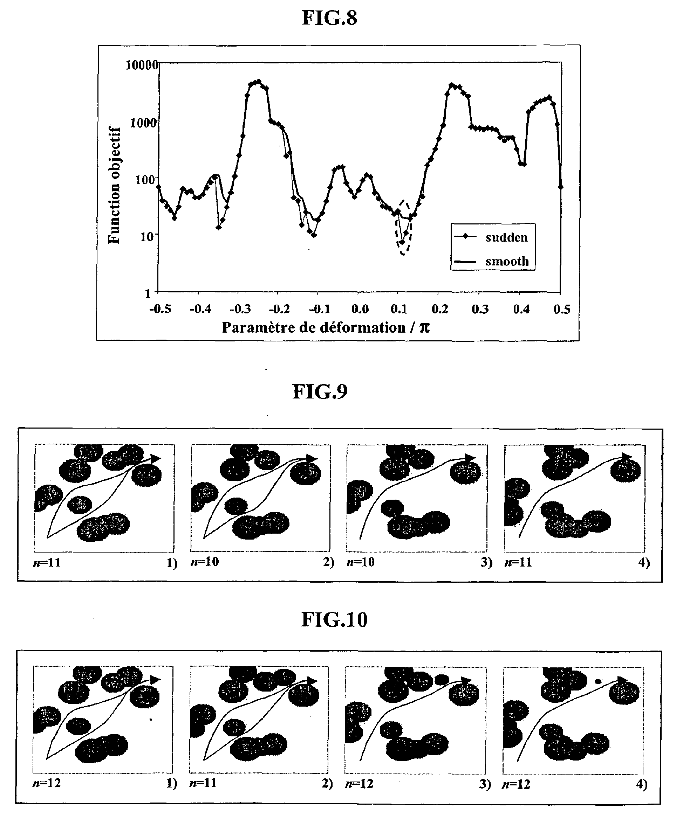

Supposons à présent que l'on ignore tout de la position et du nombre des lentilles. Ne connaissant que la réponse en pression au puits injecteur et la réponse en eau au puits producteur, on cherche à identifier un modèle de réservoir aussi cohérent que possible avec ces données. On suppose que des informations issues de la géologie, par exemple, permettent d'approcher le nombre des lentilles à partir d'une loi de Poisson de paramètre 10. En appliquant les processus de déformation graduelle suggérés plus avant, on construit une chaîne de simulations booléennes caractérisées par la variation graduelle du nombre d'ellipses et leur position. On aurait pu aussi considérer la déformation graduelle de la taille des ellipses. Pour toutes ces simulations, on simule numériquement le test d'injection et on en déduit une fonction objectif mesurant l'écart entre les données de référence et les données simulées (figure **8**). Le paramètre de déformation *t* contrôle à la fois la déformation du nombre d'ellipses et leur position. Les relations de déformation graduelle sont telles qu'on explore une période complète avec *t* variant entre -π/2 et +π/2. On examine deux cas. Les ellipses apparaissent et disparaissent soudainement pour le premier et progressivement pour le deuxième. Pour le premier cas, la fonction objectif évolue parfois par sauts. On vérifie que ces derniers sont absents, ou au moins très atténués, pour le deuxième. La variation du nombre d'objets en fonction du paramètre de déformation tout au long de la chaîne est décrite sur la **figure 4 :** ce nombre est celui que l'on a pour des apparitions et disparitions soudaines d'ellipses.

Sur la figure 8, pour la courbe en trait épais, le nombre d'objets varie avec apparition et disparition progressive des objets. Pour les losanges, le nombre d'objets varie avec apparition et disparition soudaine des objets - il est spécifié par la figure 4. Concentrons nous sur les 4 réalisations dont les valeurs de fonction objectif sont encerclées sur la figure 8. On se trouve justement dans un cas où la fonction objectif affiche un comportement discontinu lorsque les ellipses apparaissent et disparaissent soudainement. Au contraire, l'évolution est continue pour des apparitions et disparitions progressives. Les réalisations en question sont représentées sur la figure 9 et la figure 10. Sur la figure 9 2), on observe que la disparition brusque d'une ellipse agrandit significativement le couloir d'écoulement du puits injecteur vers le puits producteur. Cette réalisation est d'ailleurs celle qui, de toute la chaîne, fournit la fonction objectif la plus faible. Ce n'est pas le cas sur la figure 10 2), même si l'ellipse concernée a diminué en taille. Cette dernière continue de se réduire sur la figure 10 3). Sur la figure 10 4), elle devient si petite que son effet est négligeable et que les scenarii 9-4 et 10-4 sont finalement équivalents.

### *Construction successive de chaînes de déformation*

Comme explicité à la fin de la section 2 ci-dessus, on peut, au cours d'un processus de minimisation, explorer successivement plusieurs chaînes, sachant que la réalisation de départ pour une chaîne est la réalisation optimale identifiée pour la chaîne précédente. La seule différence par rapport à ce qui a été dit dans la section 3, est qu'on intègre aussi les segments tronqués dans la construction du segment de longueur λ .

### Revendications

1. Méthode pour déformer graduellement un modèle booléen permettant de simuler au mieux la configuration spatiale dans une zone souterraine hétérogène, d'objets géologiques définis par des grandeurs physiques, qui soit contraint par des données dynamiques mesurées, représentatives de déplacements de fluides dans le milieu, et en imposant une continuité dans l'évolution des dits objets, dans laquelle on réalise un processus itératif d'optimisation à partir de réalisations incluant chacune des objets dont le nombre est tiré d'une variable aléatoire de Poisson de moyenne défini, et on minimise une fonction objectif mesurant l'écart entre des données dynamiques réelles et les données dynamiques simulées au moyen d'un simulateur d'écoulement à partir de la réalisation combinée, par ajustement de coefficients de combinaison, le processus d'ajustement itératif étant poursuivi jusqu'à l'obtention d'une réalisation optimale du modèle stochastique, dans laquelle, à chaque itération, on construit une réalisation combinée obtenue par combinaison d'une part d'une réalisation initiale formée de N1(t) objets correspondant à une première valeur moyenne et d'au moins une deuxième réalisation indépendante du même modèle formée de N2(t) objets correspondant à une deuxième valeur moyenne, cette combinaison étant telle que le nombre N(t) d'objets de La combinaison ait une valeur moyenne égale à la somme de la première et de la deuxième valeur moyenne, **caractérisée en ce que** à chaque itération, pour une même valeur moyenne de la combinaison, on fait varier de façon concomitante la première et la deuxième valeur moyenne de manière à faire varier graduellement le nombre d'objets issus de chacune des réalisations combinées.

2. Méthode selon la revendication 1, dans laquelle on associe la taille d'objets à la procédure de génération du nombre d'objets de manière à faire apparaître ou disparaître un objet progressivement.

3. Méthode selon la revendication 1 ou 2, dans laquelle le nombre N(t) d'objets de la combinaison de moyenne $\lambda$ est relié aux nombres d'objets respectifs Ni (i=1...n) des réalisations combinées par la relation :

$$N(t)\{\lambda\} = \sum_{i=1}^{n} N_i\{a_i(t)\lambda\} \text{ avec } \sum_{i=1}^{n} a_i = 1,$$ relation où $a_i(t)\lambda$ est la moyenne de la variable $N_i$ au moment de la combinaison.

4. Méthode selon la revendication 3, dans laquelle pour une combinaison impliquant seulement deux réalisations, on choisit pour les coefficients $a_1$, $a_2$ des fonctions trigonométriques telles que par exemple les valeurs $a_1 = \cos^2(t)$ et $a_2 = \sin^2(t)$.


**Claims**

1. A method for gradually deforming a Boolean model allowing to best simulate the spatial configuration, in a heterogeneous underground zone, of geologic objects defined by physical quantities, that is constrained to measured dynamic data representative of fluid displacements in the medium, and by imposing a continuity in the evolution of said objects, wherein an iterative optimization process is carried out from realizations including each one of the objects whose number is drawn from a Poisson random variable of determined mean, and an objective function measuring the difference between real dynamic data and the dynamic data simulated by means of a flow simulator is minimized from the combined realization, by adjustment of combination coefficients, the iterative adjustment process being continued until an optimum realization of the stochastic model is obtained, wherein, upon each iteration, a combined realization obtained by combination, on the one hand, of an initial realization consisting of N1 (t) objects corresponding to a first mean value and of at least a second independent realization of the same model consisting of N2(t) objects corresponding to a second mean value is constructed, this combination being such that the number N(t) of objects of the combination has a mean value equal to the sum of the first and of the second mean value, **characterized in that**, upon each iteration, the first and the second mean value are varied concomitantly so as to gradually vary the number of objects from each one of the combined realizations.

2. A method as claimed in claim 1, wherein the size of the objects is associated with the procedure for generating the number of objects so as to make an object appear or disappear progressively.

3. A method as claimed in claim 1 or 2, wherein the number N(t) of objects of the combination of mean $\lambda$ is related to the respective numbers of objects Ni (i=1... n) of the combined realizations by the relation:

$$N(t)\{\lambda\} = \sum_{i=1}^{n} N_i\{a_i(t)\lambda\} \text{ with } \sum_{i=1}^{n} a_i = 1,$$ a relation where $\alpha_i(t)\lambda$ is the mean of variable Ni at the time of the combination.

4. A method as claimed in claim 3 wherein, for a combination involving only two realizations, trigonometric functions such as, for example, values $a_1 = \cos^2(t)$ and $a_2 = \sin^2(t)$ are selected for coefficients $a_1$, $a_2$.


**Patentansprüche**

1. Verfahren zum allmählichen Verformen eines booleschen Modells, das die beste Simulation der räumlichen Konfiguration von geologischen Objekten, die durch physikalische Größen definiert sind, in einer heterogenen unterirdischen Zone ermöglicht, die durch gemessene dynamische Daten beschränkt ist, die für Verlagerungen von Flüssigkeiten in dem Umfeld repräsentativ sind, wobei ein iterativer Optimierungsvorgang von Realisierungen durchgeführt wird, die jeweils Objekte beinhalten, deren Anzahl aus einer Poisson-Zufallsvariable mit definiertem Mittelwert abgeleitet wird, und eine objektive Funktion minimiert wird, die den Unterschied zwischen tatsächlichen dynamischen Daten und den simulierten dynamischen Daten mittels eines Strömungssimulators aus der kombinierten Realisierung durch Anpassung von Kombinationskoeffizienten misst, wobei der iterative Anpassungsvorgang bis zum Erhalten einer optimalen Realisierung des stochastischen Modells fortgesetzt wird, wobei bei jeder Iteration eine kombinierte Realisierung erstellt wird, die durch Kombination eines Teils einer anfänglichen Realisierung, die von N 1 (t) Objekten gebildet wird und die einem ersten Mittelwert entspricht, und mindestens einer zweiten unabhängigen Realisierung desselben Modells, die von N2(t) Objekten gebildet wird und die einem zweiten Mittelwert entspricht, erhalten wird, wobei diese Kombination derart ist, dass die Anzahl N(t) von Objekten der Kombination einen Mittelwert aufweist, der der Summe des ersten und des zweiten Mittelwerts gleich ist, **dadurch gekennzeichnet, dass** bei jeder Iteration für ein und denselben Mittelwert der Kombination der erste und der zweite Mittelwert gleichzeitig variiert werden, um die Anzahl der Objekte, die aus jeder der kombinierten Realisierungen hervorgeht, allmählich zu variieren.

2.  Verfahren nach Anspruch 1, wobei die Größe der Objekte mit dem Verfahren der Erzeugung der Anzahl der Objekte assoziiert wird, um ein Objekt schrittweise auftauchen oder verschwinden zu lassen.

3.  Verfahren nach Anspruch 1 oder 2, wobei die Anzahl N(t) der Objekte der Kombination mit dem Mittelwert $\lambda$ durch das folgende Verhältnis mit den Anzahlen der jeweiligen Objekte Ni (i = 1...n) von kombinierten Realisierungen verbunden wird: $N(t)\{\lambda\} = \sum_{i=1}^{n} N_i \{a_i(t)\lambda\}$, wobei $\sum_{i=1}^{n} a_i = 1$, ein Verhältnis, in dem $a_i(t)\lambda$ der Mittelwert der Variable $N_i$ im Moment der Kombination ist.

4.  Verfahren nach Anspruch 3, wobei für eine Kombination, die nur zwei Realisierungen einschließt, für die Koeffizienten $a_1$, $a_2$ trigonometrische Funktionen ausgewählt werden, wie beispielsweise die Werte $a_1 = \cos^2(t)$ und $a_2 = \sin^2(t)$.

**FIG.1**

**FIG.2**

**FIG.3**

**FIG.4**

Poisson realisation

Paramètre de déformation / π

## FIG.5

## FIG.6A

## FIG.6B

## FIG.6C

## FIG.7

## FIG.8

## FIG.9

## FIG.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2780798
- FR 2795841
- FR 2821946
- FR 0213632
- FR 0302199
- WO N0103194 A, Hu

**Littérature non-brevet citée dans la description**

- **CHILÈS, J. P. ; DELFINER, P.** Geostatistics: Modeling spatial uncertainty. Wiley, 1999, 695
- **HU, L.-Y.** Gradual déformation and iterative calibration of Gaussian-related stochastic models. *Math. Geol.,* 2000, vol. 32 (1
- **HU, L.-Y.** Gradual déformation of non-Gaussian stochastic models, Geostats 2000 Cape Town. 2000, vol. 1, 94-103
- **HU, L.-Y.** History matching of object-based stochastic réservoir models. *SPE 81503,* 2003
- **JOURNEL, A. ; HUIJBREGTS, C.J.** Mining Geostatistics. Academic Press, 1978, 600
- **LE RAVALÉE, M. ; NOETINGER, B. ; HU, L.-Y.** The FFT moving average (FFT-MA) generator: an efficient numerical method for generating and conditioning Gaussian simulations. *Math. Geol.,* 2000, vol. 32 (6), 701-723
- **LE RAVALEC, M. ; HU, L.-Y. ; NOETINGER, B.** Stochastic Reservoir modeling constrained to dynamic data: local calibration and inference of the structural parameters. *SPE Journal,* 2001, 25-31